# EUROPEAN PATENT SPECIFICATION

(11) **EP 2 475 158 B1**
(45) Date of publication and mention of the grant of the patent: **05.09.2018**
(21) Application number: 12150534.1
(22) Date of filing: 10.01.2012
(51) Int. Cl.: H04M 3/42, G01C 21/00

(54) **Apparatus and method for providing user's route information in mobile communication system**
Vorrichtung und Verfahren zur Bereitstellung von Routeninformationen eines Benutzers in einem Funkkommunikationssystem
Appareil et procédé de fourniture d'informations de route d'utilisateur dans un système de communication mobile

(30) Priority: 10.01.2011 KR 20110002160
(43) Date of publication of application: 11.07.2012
(73) Proprietor: Samsung Electronics Co., Ltd., Suwon-si, Gyeonggi-do, 443-742 (KR)
(72) Inventor: Jo, Hang-Cheon, Gyeonggi-do (KR); Do, Young-Mi, Gyeonggi-do (KR)
(74) Representative: Nederlandsch Octrooibureau

(56) References cited:
- WO-A2-03/008992
- US-A1- 2003 119 522

## Description

### TECHNICAL FIELD OF THE INVENTION

The present invention relates to an apparatus and a method for searching a route of a portable terminal, in particular an apparatus and a method in which a user located at a destination verifies the positional information of an other user moving toward the destination and the other user moving toward the destination verifies a route to the user located at the destination.

### BACKGROUND OF THE INVENTION

In recent, portable terminals are used regardless of sex or age as necessity for modern life and providers of services and manufacturers of terminals are developing goods or services competitively for differentiating his goods or services from others.

For example, some portable terminals have advanced to a multimedia device that may provide various services such as phone book, short message service, e-mail, morning call, MP3, management of schedule, digital camera and wireless internet service.

And also, the above-mentioned portable terminals may receive satellite signal and access to traffic information system for providing traffic report, or may provide some user with navigation function to provide some information of a specific route.

The above-mentioned navigation function is to provide a route between a departure point and an arrival point based on map data and, therefore, a user who cannot analyze map date may have difficulty in finding a destination. That is, a user who utilizes the above-mentioned navigation function may have some problem that he can reach the approximate location of a destination but he may difficulty in finding the exact point where the other party is located.

And also, the above-mentioned portable terminals may receive satellite signal and access to traffic information system for providing traffic report, or may provide some user with navigation function to provide some information of a specific route.

The above-mentioned navigation function is to provide a route between a departure point and an arrival point based on map data and, therefore, a user who cannot analyze map date may have difficulty in finding a destination. That is, a user who utilizes the above-mentioned navigation function may have some problem that he can reach the approximate location of a destination but he may difficulty in finding the exact point where the other party is located.

And also, the above-mentioned navigation function is to provide a route based on position and, hence, may have some problem that a user located at a destination and the other moving to the destination cannot verify a route and the positional information of the other party. And consequently, the users cannot verify whether the other party moves along an exact route or not.

Therefore, for resolving the above mentioned problem, it is necessary to provide an apparatus and a method for sharing positional information related to a route of a user to perform call connection in a mobile telecommunication system.

US 2003/0119522 discloses an apparatus and method to provide location information for a calling party to a called party and/or provide a location for called party to a calling party. The information may be provided to a customer on a subscription basis or a customer may query for location information for the party at the other end of a call on an ad hoc basis. The customer may select the granularity of the location information as well as the format (309) in which the information is sent. A party may optionally disable the location ID feature so that the other person is not able to receive the party's location.

WO 03/008992 discloses a system and method for providing real-time position information of one party to another party by utilizing a conventional telecommunication network system such as the convention telephone network, a mobile telecommunications network, a computer network, or the Internet. More specifically, the preferred embodiments of the present invention allow a caller and a receiver of a telephone call to provide to and receive from each other position information related to the caller and/or receiver's physical location, including address information, GPS coordinates, nearby fixed locations such as a parking structure, etc. Additionally, the preferred embodiments of the present invention allow a caller and receiver to retrieve routing instructions or maps for traveling to or from each other.

### SUMMARY OF THE INVENTION

An aspect of the present disclosure is to solve at least the above-mentioned problems and/or disadvantages and to provide at least the advantages described below. Accordingly, an aspect of the present invention is to provide an apparatus according to claim 1 and method according to claim 6 for sharing the positional information of a user in a mobile telecommunication system.

Another aspect of the present disclosure is to provide an apparatus and a method for verifying the positional information of a user moving toward other user in a portable terminal of the other user located at a destination.

Another aspect of the present disclosure is to provide an apparatus and a method for providing a route to a user located at a destination in a portable terminal moving toward the destination.

Another aspect of the present disclosure is to provide an apparatus and a method for sharing the positional information of a user with augmented reality method in a mobile telecommunication system.

In accordance with an aspect of the present disclosure, an apparatus to provide route information in a portable terminal is provided. The apparatus includes a controlling part for performing a call connection with the other party and for processing exchange of positional information with an other party, a route analyzing part for analyzing the route information with positional information of the apparatus and the positional information of the other party and a displaying part for controlling output of the positional information analyzed by the route analyzing part, wherein the controlling part controls the positional information analyzed by the route analyzing part to be displayed.

In accordance with another aspect of the present disclosure, a method for providing route information in a portable terminal is provided. The method includes performing call connection with the other party, exchanging positional information with the other party and providing route information using his positional information and the positional information of the other party.
Further advantageous embodiments are claimed in the dependent claims.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIGURE 1 illustrates a portable terminal for sharing the positional information of a user in a mobile telecommunication system according to the present disclosure.
FIGURE 2 illustrates a process for providing route information related to a destination in a portable terminal according to the present disclosure.
FIGURE 3 illustrates a process to verify the position of the other party in a portable terminal according an exemplary embodiment of the present disclosure.
FIGURE 4 illustrates a process to verify the position of a destination in a portable terminal according to an exemplary embodiment of the present disclosure.
FIGURE 5A illustrates a display screen to verify the position of the other party with map data in a portable terminal according to an exemplary embodiment of the present disclosure.
FIGURE 5B illustrates a display screen to verify the position of the other party with augmented reality method in a portable terminal according to an exemplary embodiment of the present disclosure.
FIGURE 6 illustrates a display screen to verify the position of a destination in a portable terminal according to an exemplary embodiment of the present disclosure.

Throughout the drawings, like reference numerals will be understood to refer to like parts, components and structures.

### DETAILED DESCRIPTION OF EXEMPLARY EMBODIMENTS

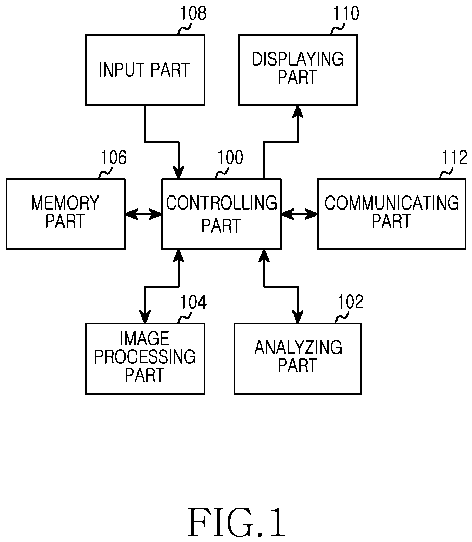

FIGURES 1 through 6, discussed below, and the various embodiments used to describe the principles of the present disclosure in this patent document are by way of illustration only and should not be construed in any way to limit the scope of the disclosure.

Exemplary embodiments of the present disclosure will be described herein below with reference to the accompanying drawings. In the following description, well-known functions or constructions are not described in detail since they would obscure the invention in unnecessary detail.

An apparatus and a method for performing call connection and sharing the positional information of a user in a mobile telecommunication system will be described herein below, and an apparatus and a method for verifying the positional information of a user moving toward a place where an other user is located in a portable terminal of the other user located at the destination and for providing a route to the other user located at the destination in the portable terminal moving toward the destination will be described according to an exemplary embodiment of the present illustrates.

FIGURE 1 illustrates a portable terminal for sharing the positional information of a user in a mobile telecommunication system according to the present illustrates.

Referring to FIGURE 1, a portable terminal may comprise a controlling part 100, a route analyzing part 102, an image processing part 104, a memory part 106, an input part 108, a displaying part 110 and a communicating part 112.

At first, the controlling part 100 controls the overall operation of the portable terminal. For example, the controlling part 100 may execute a process and control for voice communication and data communication, and the controlling part 100 may process, in addition to its general function, share of the positional information related to a user performing call connection and provision of a route to a destination.

In the above mentioned course, the portable terminal will be classified one portable terminal located at a destination and the other portable terminal moving toward the destination, and consequently the operation of the controlling part 100 will described separately.

At first, the controlling part 100 of the portable terminal moving to a destination may process the share of positional information with a portable terminal located at the destination, if a route to the destination is required during performance of call connection. Next, the controlling part 100 sets his positional information as a starting point and sets the positional information of the other party located at the destination as the destination, to find a route to the destination. In the course, the controlling part 100 may provide the other party located at the destination with his positional information and make his position moving toward the destination be found until reaching the destination.

And also, the controlling part 100 of the portable terminal located at the destination may process the share of the positional information with the portable terminal moving toward the destination, if the route to the destination is required during performance of call connection. In turn, the controlling part 100 may set his positional information as the destination and set the positional information of the other party moving toward the destination as the starting point, to find the position of the other party moving toward the destination. In the course, the controlling part 100 may obtain positional information until the other party moving toward the destination reaches the destination and find the position of the other party moving toward the destination. With this, the user moving toward the destination may find the exact position of the other party and may move along an exact route to the destination, and the user located at the destination may check whether the other party moves toward his position along an exact route or not.

The route analyzing part 102 of the portable terminal may figure out a route from the starting point to the destination based on the instruction of the controlling part 100. That is, the route analyzing part 102 may obtain the positional information of the other party and his positional information and find out a route to the destination or the position of the user moving toward the destination.

The image processing part 104 may process the output of the route and the position of the user found out by the analyzing part 102 at an output screen, namely at the displaying part 110 by the instruction of the controlling part 100. That is, the image processing part 104 of the portable terminal moving toward the destination may process the output of the positional information of the user, the changed positional information of the user until reaching the destination and the route to destination using map data or augmented reality method.

And also, the image processing part 104 of the portable terminal located at the destination may process the output of the changed positional information of the user moving toward his place using map data or augmented reality method.
The memory part 106 of the portable terminal may comprise ROM, RAM and flash ROM. ROM may store a micro-code of program and various reference data for processing and controlling the route analyzing part 102 and the image processing part 104.

RAM corresponding to the working memory of the controlling part 100 may store temporary data generated during the process of the various program. And also, flash ROM may store various filing data that can be updated and comprises a telephone book, outgoing and incoming messages, and touch input point information of a user. And also, the memory part 106 may store map data for finding a route of a user according to the present disclosure.

The input part 108 may comprise numeral key button from zero to nine, menu button, cancel button, confirm button, call button, end button, internet access button, navigation key(or direction key) button, character input key, a plural of function keys and the like, and the input part 108 may provide the controlling part 100 with key input data corresponding to the key that is pressed by a user and the input part 108 may generate input date for sharing positional information according to the present disclosure.

The displaying part 110 may display status information occurring during the operation of the portable terminal, limited number of characters, a great quantity of video, image and the like, and the displaying part 110 may output the positional information of a user moving toward a destination and positional information with map data and augmented reality method according to the present disclosure. The displaying part 110 may output data with color liquid crystal display apparatus, AMOLED and the like, and the displaying part 110 may comprise touch input apparatus to use as an input apparatus when the displaying part 110 is applied for a touch input type of portable terminal.

The communicating part 112 may perform function to process wireless signal of data input and output through an antenna (not illustrated). For example, the communicating part 112 may perform function to RF-process and transmit after channel-coding and spreading data to be transmitted when transmitting mode, and the communicating part 112 may perform function to recover the data after converting the received RF signal into baseband signal, spreading and channel-decoding the baseband signal when receiving mode. And also, the communicating part 112 may perform function to share positional information with the other party.

The function of the route analyzing part 102 and the image processing part 104 may be performed by the controlling part 100 of the portable terminal, but the above-mentioned embodiment in which each component is described separated functionally is not for an intend to limit the scope of the present disclosure but for easy description of an example according to the present invention and therefore the skilled in this art may recognize that it is possible for various modification to be made. For example, such embodiment in which all the function is processed by the controlling part 100 may be considered.

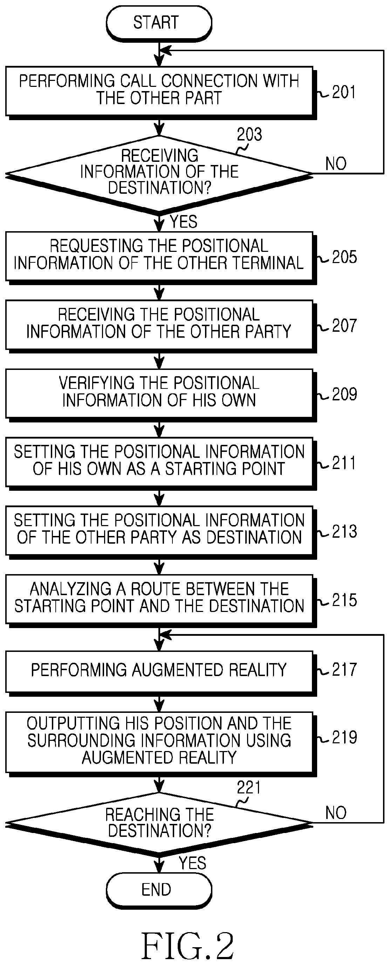

FIGURE 2 illustrates a process for providing route information related to a destination in a portable terminal according to the present illustrates.

Referring to FIGURE 2, at first, the portable terminal performs call connection with the other party through the terminal of the other party moving toward the destination 201, and next checks whether it receives the information of the destination from the other party 203. In the above, some circumstance to receive the information of the destination means the circumstance to receive information related to an area in which the other party is located. For example, in some circumstance that an appointed place cannot be find, the positional information of the other party who has reached the appointed place can be requested and received.

If the destination information is not received in the step 203, the portable terminal may proceed to the step 201 and maintains call connection being already performed.

Meanwhile, if the portable terminal receives the destination information, the portable terminal may proceed to the step 205 for requesting the positional information to the other party and proceed to the step 207 for receiving the positional information from the other party.

Next, the portable terminal may proceed to the step 209 for verifying the positional information and proceed to the step 211 for setting his position as a starting point using the verified positional information. And then, the portable terminal may proceed to the step 213 for setting the positional position of the other party as a destination, and then may proceed to the step 215 for analyzing the route between the starting point and the destination. That is, the portable terminal can analyze the route to the destination corresponding to the position of the other party based on his position.

And then, the portable terminal may proceed to the step 217 for operating a camera module and performing the function of augmented reality and in turn may proceed to the step 219 for outputting the present position and the information of the surroundings using augmented reality.

And then, the portable terminal may proceed to step 221 for verifying whether the portable terminal of the other party reaches the destination.

If it is not confirmed that the portable terminal of the other party reached the destination during the performance of the step 221, the portable terminal may proceed to the step 217 once more for providing the route to the destination using augmented reality method.

Meanwhile, the portable terminal may terminate the above-mentioned algorism if the portable terminal verified that the portable terminal of the other party had reached the destination.

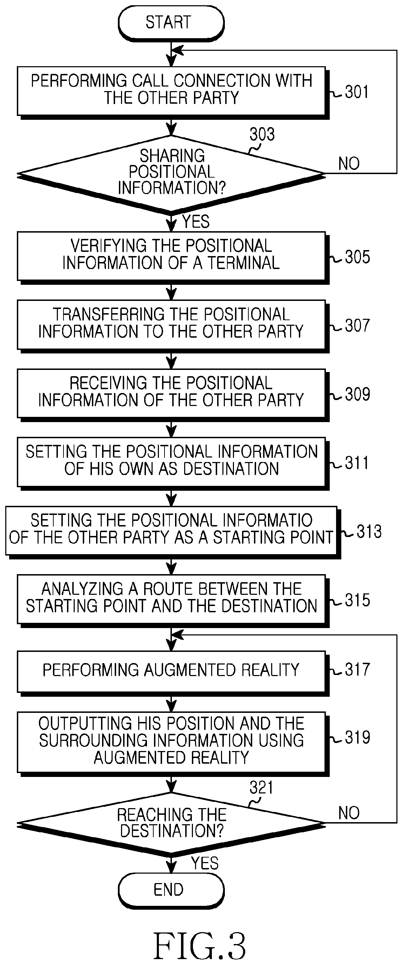

FIGURE 3 illustrates a process to verify the position of the other party in a portable terminal according to an exemplary embodiment of the present disclosure.

Referring to FIGURE 3, the portable terminal may perform a call connection with the portable terminal of the other party located at the destination in the step 301 and then proceed to the step 303 for verifying whether some circumstance that the share of positional information is required happens.

In the above, the above mentioned circumstance that the share of positional information is required means a circumstance that the other party is provided with his positional information and an exact movement of the other party is checked.

If it is not verified that the share of positional information is required in the step 303, the portable terminal may proceed to the step 301 once more.

Meanwhile, if it is verified that the share of positional information is required, the portable terminal may proceed to the step 307 for transmitting the verified his position to the other party after the portable terminal proceed to the step 305 for checking his positional information,.

And then, the portable terminal may proceed to the step 309 for receiving the positional information of the other party and may proceed to the step 311 for setting his positional information as a destination.

And then, after the portable terminal may proceed to the step 313 for setting the positional position of the other party as a starting point, the portable terminal may proceed to the step 315 for analyzing a route between the starting point and the destination.

In the above, the portable terminal sets his position as the destination for verifying the route of the other party and checks the position of the other party moving toward the destination.

Next, the portable terminal may proceed to the step 317 for operating a camera module and performing the function of augmented reality and then may proceed to the step 319 for processing output of the positional information of the other party using augmented reality method.

And then, the portable terminal may proceed to the step 321 for checking the other party to reach the destination.

If the portable terminal does not verify that the other party reaches the destination in the step 321, the portable terminal may proceed to the step 317 once more for providing the position transition until arriving at the destination of the other party using augment reality method. That is, the portable terminal may receive the positional information of the other party in a predetermined time interval until the other party reaches the destination.

Meanwhile, the portable terminal may terminate the above algorism, if the portable terminal confirms the other party to reach the destination in the step 321.

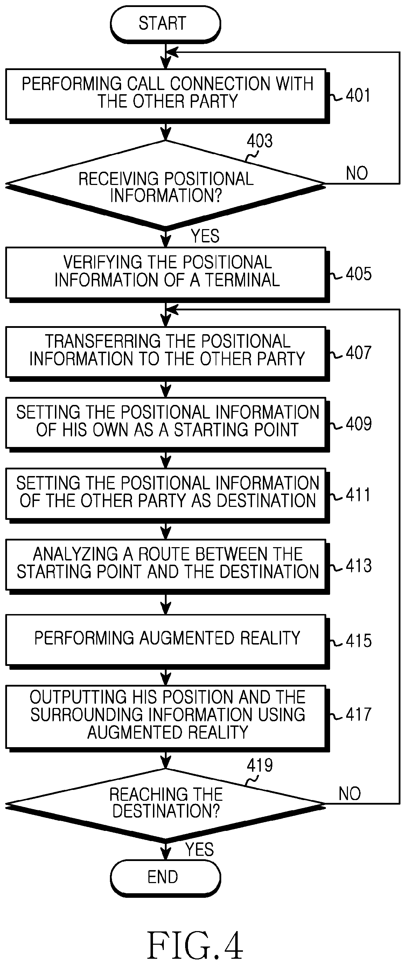

FIGURE 4 illustrates a process to verify the position of destination in a portable terminal according to an exemplary embodiment of the present disclosure.

Referring to FIGURE 4, the portable terminal may provide his positional information changing until arriving at the destination with the terminal of the other party moving toward the destination. At first the portable terminal may proceed to the step 401 for performing a call connection with the other party at first and then may proceed to the step 403 for checking whether the positional information is received from the other party. In the above, the step 403 exhibits the process to receive the positional information of the other party located at the destination can be made.

If it is not confirmed that positional information from the other party is received in the step 403, the portable terminal may proceed to the step 401 once more.

Meanwhile, the portable terminal may proceed to the step 405 for checking his positional information and then may proceed to the step 407 for transmitting his verified position to the other party, if it is confirmed that the positional information from the other party is received in the step 403.

And then, the portable terminal may proceed to the step 409 for setting his positional information as a starting point and may proceed to the step 411 for setting the positional information of the other party as a destination.

And then, the portable terminal may proceed to the step 413 for analyzing a route between the starting point and the destination.

In the above, the portable terminal sets the position of the other party as the destination in order to move toward the position of the other party.

And then, after the portable terminal may proceed to the step 415 for operating a camera module and for performing the function of augmented reality method, the portable terminal may proceed to the step 417 for outputting his position and the information of the surroundings with augmented reality method.
And then, the portable terminal may proceed to the step 419 for checking whether the other party reaches the destination.

The portable terminal may proceed to the step 407 for transmitting his changing position to the other party and hence the other party can find his changed position, if it is not confirmed that the other party reached the destination in the step 419.

Meanwhile, the portable terminal may terminate the above-mentioned algorism, if it is confirmed that the other party reached the destination in the step 419.

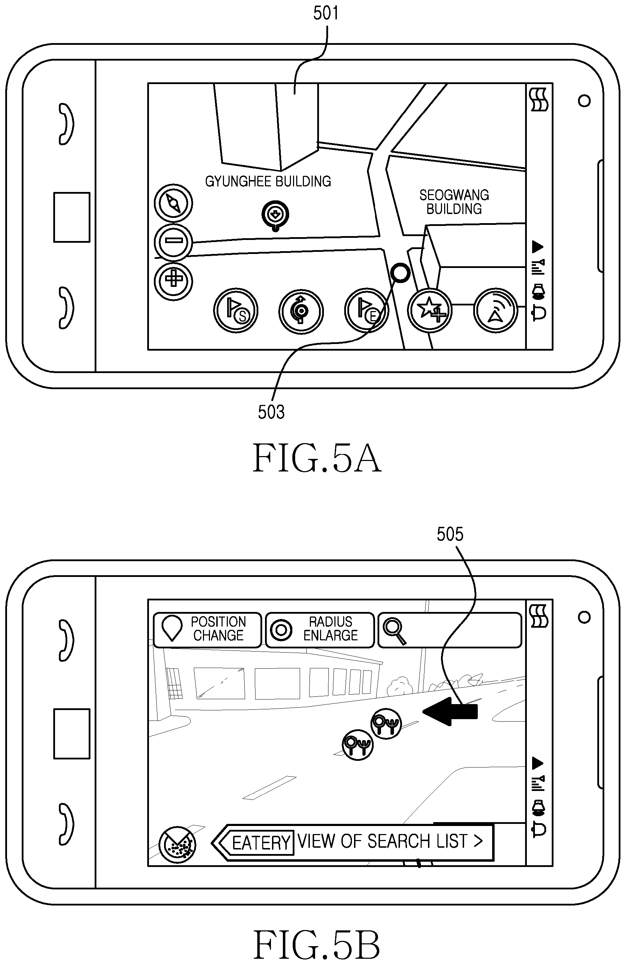

FIGURE 5A illustrates a display screen to verify the position of the other party with map data in a portable terminal according to an exemplary embodiment of the present disclosure.

Referring to FIGURE 5A, the portable terminal may confirm the position of the other party moving toward his position using general map data.

As shown in the drawing, the portable terminal may process the output of the route of the other party based on his position in a map data.

In the above, the portable terminal may set his position as a destination 501 and set the position of the other party as a starting point and then may check the route of the other party.

With this, the user of the portable terminal can check if the other party moves exactly toward his position and if the other party deviate from the route accidently, the user may guide the other party to the exact route.

That is, the user of the portable terminal may verify the other part 503 moving from right on his position 501 basis and the user may consider that the user can reach his position via left corner. But, if the other party moves through right corner, the user of the portable terminal recognizes the other party to move along wrong route and inform the other party of an exact route to reach his position.

As above-mentioned, while the user of portable terminal may perform a call connection with the other party, the user of the portable terminal may provide the route by exchanging the positional information, and the user can provide the route by exchanging the positional information automatically (for example, with short message) until he function of route guide is ended regardless of the termination of the call connection.

FIGURE 5B illustrates a display screen to verify the position of the other party with augmented reality in a portable terminal according to an exemplary embodiment of the present disclosure.

Referring to FIGURE 5B, the portable terminal may verify the position of the other party moving toward his position with augmented reality method.

As shown in the drawing, the portable terminal may receive a real image of the surroundings of his position with a camera module and utilize augmented reality method in which the important information of the surroundings is designated as a virtual icon 505 and displayed.

With this, the user of the portable terminal may check the direction in which the user is moving through the image of surroundings and verify more real positional information than the map data illustrated in FIGURE 5A.

That is, the user of the portable terminal may speculate the route of the other party by verifying the arrow which shows the other party to move from right on basis of his surroundings.

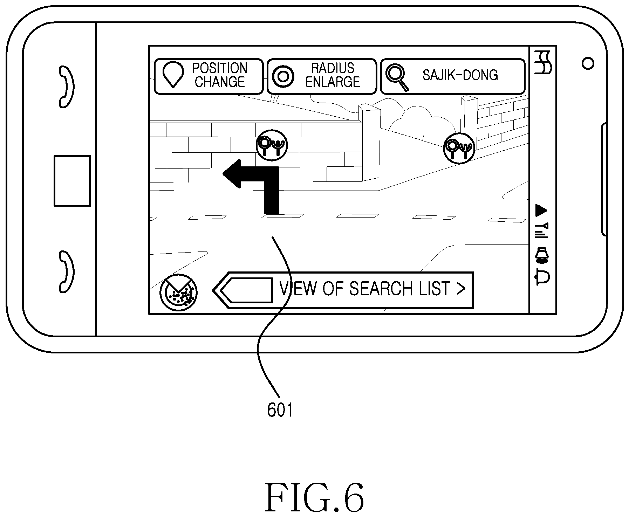

FIGURE 6 illustrates a display screen to verify the position of the destination in a portable terminal according to an exemplary embodiment of the present disclosure.

Referring to FIGURE 6, the portable terminal may receive positional information from the other party for verifying a route to a destination during call connection with the other party located at the destination and may check a route to the position of the other party.

The portable terminal which checks the route as shown in the above may obtain the real image of the surroundings of his position with a camera and may provide 601 a route to the destination with augmented reality method in which the important information of surroundings is designated as virtual icon and displayed. Of course, the portable terminal may provide the other party with his positional information until reaching the destination and the other party may find out his moving position.

As described in detail, the purpose of the present disclosure is to provide an apparatus and a method for sharing positional information of the other party performing call connection in a mobile telecommunication, and according to the present disclosure it is possible to verify the positional information of the user who moves toward his position in the portable terminal of the user located at the destination, to provide a route to the user located at the destination in the portable terminal moving toward the destination, and to check the positional information along the route of the user who performs the call connection

While the present disclosure has been particularly shown and described with reference to exemplary embodiments thereof, it will be understood by those skilled in the art that various changes in form and details may be made therein without departing from the scope of the present disclosure as defined by the appended claims.

## Claims

1. An apparatus for providing route information to a user in a portable terminal, the apparatus comprising:
a controlling part (100) arranged to receive, during a call connection with an
other party, a positional information of the other party before arriving at the destination
and set a first setting or a second setting, wherein a position of the user is set as a starting point and a position of the other party is set as a destination in the first setting, and the position of the user is set as the destination and the position of the other party is set as the starting point in the second setting;
an analyzing part (104) to analyze the route information with a positional information of the user and the positional information of the other party; and **characterized by**:
a displaying part (110) arranged to output the route information analyzed by the analyzing part using an augmented reality method,
wherein the analyzing part is arranged to analyze, if the positional information of the other party or the positional information of the user is changed, the route information with a changed positional information of the user or a changed positional information of the other party before arriving at the destination,
wherein the controlling part is arranged to control the route information analyzed by the analyzing part to be output,
wherein the controlling part (100) is further configured to control the displaying part (110) to display, using the augmented reality method, a virtual icon indicating a direction in which the other party moves to the user.

2. The apparatus of claim 1, wherein the apparatus is arranged to display an indicator in order to indicate a direction of a destination in a display screen according to the augmented reality method.

3. The apparatus of claim 1, wherein the controlling part is arranged to determine the positional information of the user before arriving at the destination and to transmit the positional information to the other party.

4. The apparatus of claim 1, wherein the controlling part is arranged to provide the position of the other party moving toward the destination using the positional information of the other party received from the other party.

5. The apparatus of claim 1, the controlling part is arranged to inform the other part of the deviation from the route, if the other party deviates from the route toward the destination.

6. A method for providing route information to a user in a portable terminal, the method comprising:
receiving (207) positional information of an other party during a call connection with the other party;
setting, at the portable terminal, a first setting or a second setting, wherein a position of the user is set as a starting point and a position of the other party is set as a destination in the first setting, and the position of the user is set as the destination and the position of the other party is set as the starting point in the second setting; **characterized by**:
providing route information using the positional information of the user and the positional information of the other party using an augmented reality method
wherein the method further comprises, if the positional information of the other party or the positional information of the user is changed,
analyzing (215) the route information with a changed positional information of the user or a changed positional information of the other party before arriving at the destination;
wherein providing the route information further comprises displaying, using the augmented reality method, a virtual icon indicating a direction in which the other party moves to the user.

7. The method of claim 6, wherein the step of providing the route information using the positional information of the user and the positional information of the other party further comprises:
verifying the positional information of the user being altered until arriving at the destination; and
transmitting the positional information of the user being altered to the other party.

8. The method of claim 6, wherein the step of providing the route information using the positional information of the user and the positional information of the other party further comprises:
providing the position of the user moving toward the destination using the altered positional information received from the other party.

9. The method of claim 6, wherein the step of providing the route information using the positional information of the user and the positional information of the other party further comprises:
informing the other party of the deviation from the exact route, if the other party deviates from the route to the destination.

## Patentansprüche

1. Vorrichtung zum Bereitstellen von Routeninformationen für einen Benutzer in einem tragbaren Endgerät, wobei die Vorrichtung Folgendes umfasst:
einen Steuerteil (100), der ausgelegt ist, während einer Anrufverbindung mit einer Gegenstelle Positionsinformationen der Gegenstelle vor Ankommen am Ziel zu empfangen
und eine erste Einstellung oder eine zweite Einstellung einzustellen, wobei in der ersten Einstellung eine Position des Benutzers als ein Startpunkt eingestellt wird und eine Position der Gegenstelle als ein Ziel eingestellt wird und in der zweiten Einstellung die Position des Benutzers als das Ziel eingestellt wird und die Position der Gegenstelle als der Startpunkt eingestellt wird;
einen Analysierteil (104), um die Routeninformationen mit Positionsinformationen des Benutzers und den Positionsinformationen der Gegenstelle zu analysieren; und **gekennzeichnet durch**
einen Anzeigeteil (110), der ausgelegt ist, die Routeninformationen, die durch den Analysierteil analysiert worden sind, unter Verwendung eines Verfahrens erweiterter Realität auszugeben,
wobei der Analysierteil ausgelegt ist, wenn die Positionsinformationen der Gegenstelle oder die Positionsinformationen des Benutzers geändert werden, die Routeninformationen mit geänderten Positionsinformationen des Benutzers oder geänderten Positionsinformationen der Gegenstelle vor Ankommen am Ziel zu analysieren,
wobei der Steuerteil ausgelegt ist, die Routeninformationen, die durch den Analysierteil analysiert worden sind, die auszugeben sind, zu steuern,
wobei der Steuerteil (100) ferner konfiguriert ist, den Anzeigeteil (110) zu steuern, unter Verwendung des Verfahrens erweiterter Realität ein virtuelles Symbol anzuzeigen, das eine Richtung angibt, in der sich die Gegenstelle zum Benutzer bewegt.

2. Vorrichtung nach Anspruch 1, wobei die Vorrichtung ausgelegt ist, einen Zeiger zu dem Zweck anzuzeigen, eine Richtung eines Zieles in einem Anzeigebildschirm gemäß dem Verfahren erweiterter Realität anzugeben.

3. Vorrichtung nach Anspruch 1, wobei der Steuerteil ausgelegt ist, die Positionsinformationen des Benutzers vor Ankommen am Ziel zu ermitteln und die Positionsinformationen zur Gegenstelle zu senden.

4. Vorrichtung nach Anspruch 1, wobei der Steuerteil ausgelegt ist, die Position der Gegenstelle, die sich auf das Ziel zu bewegt, unter Verwendung der Positionsinformationen der Gegenstelle bereitzustellen, die von der Gegenstelle empfangen worden sind.

5. Vorrichtung nach Anspruch 1, wobei der Steuerteil ausgelegt ist, die Gegenstelle über die Abweichung von der Route zu informieren, wenn die Gegenstelle von der Route auf das Ziel zu abweicht.

6. Verfahren zum Bereitstellen von Routeninformationen für einen Benutzer in einem tragbaren Endgerät, wobei das Verfahren Folgendes umfasst:
Empfangen (207) von Positionsinformationen einer Gegenstelle während einer Anrufverbindung mit der Gegenstelle;
Einstellen einer ersten Einstellung oder einer zweiten Einstellung am tragbaren Endgerät, wobei in der ersten Einstellung eine Position des Benutzers als ein Startpunkt eingestellt wird und eine Position der Gegenstelle als ein Ziel eingestellt wird und in der zweiten Einstellung die Position des Benutzers als das Ziel eingestellt wird und die Position der Gegenstelle als der Startpunkt eingestellt wird; **gekennzeichnet durch**
Bereitstellen von Routeninformationen unter Verwendung der Positionsinformationen des Benutzers und der Positionsinformationen der Gegenstelle unter Verwendung eines Verfahrens erweiterter Realität,
wobei das Verfahren ferner, wenn die Positionsinformationen der Gegenstelle oder die Positionsinformationen des Benutzers geändert werden, Folgendes umfasst:
Analysieren (215) der Routeninformationen mit geänderten Positionsinformationen des Benutzers oder geänderten Positionsinformationen der Gegenstelle vor Ankommen am Ziel,
wobei Bereitstellen der Routeninformationen ferner Anzeigen eines virtuellen Symbols, das eine Richtung angibt, in der sich die Gegenstelle zum Benutzer bewegt, unter Verwendung des Verfahrens erweiterter Realität umfasst.

7. Verfahren nach Anspruch 6, wobei der Schritt des Bereitstellens der Routeninformationen unter Verwendung der Positionsinformationen des Benutzers und der Positionsinformationen der Gegenstelle ferner Folgendes umfasst:
Verifizieren der Positionsinformationen des Benutzers, die geändert worden sind, bis zum Ankommen am Ziel und
Senden der Positionsinformationen des Benutzers, die geändert worden sind, zur Gegenstelle.

8. Verfahren nach Anspruch 6, wobei der Schritt des Bereitstellens der Routeninformationen unter Verwendung der Positionsinformationen des Benutzers und der Positionsinformationen der Gegenstelle ferner Folgendes umfasst:
Bereitstellen der Position des Benutzers, der sich auf das Ziel zu bewegt, unter Verwendung der geänderten Positionsinformationen, die von der Gegenstelle empfangen worden sind.

9. Verfahren nach Anspruch 6, wobei der Schritt des Bereitstellens der Routeninformationen unter Verwendung der Positionsinformationen des Benutzers und der Positionsinformationen der Gegenstelle ferner Folgendes umfasst:
Informieren der Gegenstelle über die Abweichung von der exakten Route, wenn die Gegenstelle von der Route zum Ziel abweicht.

## Revendications

1. Appareil de fourniture d'informations d'itinéraire à un utilisateur dans un terminal portable, l'appareil comprenant :
une partie de commande (100) agencée pour recevoir, au cours d'une connexion d'appel avec une autre partie, des informations de position de l'autre partie avant d'arriver à la destination et
régler un premier réglage ou un deuxième réglage, dans lequel une position de l'utilisateur est réglée en tant qu'un point de départ et une position de l'autre partie est réglée en tant qu'une destination dans le premier réglage, et la position de l'utilisateur est réglée en tant que la destination et la position de l'autre partie est réglée en tant que le point de départ dans le deuxième réglage ;
une partie d'analyse (104) pour analyser les informations d'itinéraire avec des informations de position de l'utilisateur et les informations de position de l'autre partie ; et
**caractérisé par** :
une partie d'affichage (110) agencée pour délivrer les informations d'itinéraire analysées par la partie d'analyse en employant un procédé de réalité augmentée,
dans lequel la partie d'analyse est agencée pour analyser, si les informations de position de l'autre partie ou les informations de position de l'utilisateur ont changé, les informations d'itinéraire avec des informations de position changées de d'utilisateur ou des informations de position changées de l'autre partie avant d'arriver à la destination,
dans lequel la partie de commande est agencée pour commander aux informations d'itinéraire analysées par la partie d'analyse d'être délivrées,
dans lequel la partie de commande (100) est en outre configurée pour commander à la partie d'affichage (110) d'afficher, en employant le procédé de réalité augmentée, une icône virtuelle indiquant un sens dans lequel l'autre partie se déplace vers l'utilisateur.

2. Appareil selon la revendication 1, dans lequel l'appareil est agencé pour afficher un indicateur afin d'indiquer un sens d'une destination dans un écran d'affichage en fonction du procédé de réalité augmentée.

3. Appareil selon la revendication 1, dans lequel la partie de commande est agencée pour déterminer les informations de position de l'utilisateur avant d'arriver à la destination et transmettre les informations de position à l'autre partie.

4. Appareil selon la revendication 1, dans lequel la partie de commande est agencée pour fournir la position de l'autre partie se déplaçant vers la destination en utilisant les informations de position de l'autre partie reçues depuis l'autre partie.

5. Appareil selon la revendication 1, dans lequel la partie de commande est agencée pour informer l'autre partie de l'écart par rapport à l'itinéraire, si l'autre partie s'écarte de l'itinéraire vers la destination.

6. Procédé de fourniture d'informations d'itinéraire à un utilisateur dans un terminal portable, le procédé comprenant :
la réception (207) d'informations de position d'une autre partie au cours d'une connexion d'appel avec l'autre partie ;
le réglage, au terminal portable, d'un premier réglage ou d'un deuxième réglage, dans lequel une position de l'utilisateur est réglée en tant qu'un point de départ et une position de l'autre partie est réglée en tant qu'une destination dans le premier réglage, et la position de l'utilisateur est réglée en tant que la destination et la position de l'autre partie est réglée en tant que le point de départ dans le deuxième réglage ;
**caractérisé par** :
la fourniture d'informations d'itinéraire en utilisant les informations de position de l'utilisateur et les informations de position de l'autre partie en employant un procédé de réalité augmentée,
dans lequel le procédé comprend en outre, si les informations de position de l'autre partie ou les informations de position de l'utilisateur ont changé,
l'analyse (215) des informations d'itinéraire avec des informations de position changées de l'utilisateur ou des informations de position changées de l'autre partie avant d'arriver à la destination ;
dans lequel la fourniture des informations d'itinéraire comprend en outre l'affichage, en employant le procédé de réalité augmentée, d'une icône virtuelle indiquant un sens dans lequel l'autre partie se déplace vers l'utilisateur.

7. Procédé selon la revendication 6, dans lequel l'étape de la fourniture des informations d'itinéraire en utilisant les informations de position de l'utilisateur et les informations de position de l'autre partie comprend en outre :
la vérification des informations de position de l'utilisateur qui sont altérées jusqu'à l'arrivée à la destination ; et
la transmission des informations de position de l'utilisateur qui sont altérées à l'autre partie.

8. Procédé selon la revendication 6, dans lequel l'étape de la fourniture des informations d'itinéraire en utilisant les informations de position de l'utilisateur et les informations de position de l'autre partie comprend en outre :
la fourniture de la position de l'utilisateur se déplaçant vers la destination en utilisant les informations de position altérées reçues depuis l'autre partie.

9. Procédé selon la revendication 6, dans lequel l'étape de la fourniture des informations d'itinéraire en utilisant les informations de position de l'utilisateur et les informations de position de l'autre partie comprend en outre :
l'information à l'autre partie de l'écart par rapport à l'itinéraire exact, si l'autre partie s'écarte de l'itinéraire vers la destination.
